# EUROPEAN PATENT SPECIFICATION

(11) **EP 4 320 201 B1**
(45) Date of publication and mention of the grant of the patent: **26.03.2025**
(21) Application number: 22720148.0
(22) Date of filing: 07.04.2022
(51) Int. Cl.: C09D 11/102, C09D 11/38, C09D 11/322, C09D 17/00, C08G 65/00, C08G 69/00

(54) **NEUTRALIZED MULTI-AMINE DISPERSANT COMPOSITIONS**
NEUTRALISIERTE MULTIAMIN-DISPERGIERMITTELZUSAMMENSETZUNGEN
COMPOSITIONS DISPERSANTES NEUTRALISÉES DE MULTI-AMINE

(30) Priority: 09.04.2021 US 202163172890 P
(43) Date of publication of application: 14.02.2024
(73) Proprietor: Lubrizol Advanced Materials, Inc., Cleveland, OH 44141-3247 (US)
(72) Inventor: WILKINSON, Conor, Derbyshire M9 8ZA (GB); COULBECK, Elliot, Derbyshire M9 8ZS (GB); ESCURIET, Segio, 08173 Barcelona (ES); COLLINGE, Michael, Derbyshire M9 8ZS (GB)
(74) Representative: Evans, Sophie Elizabeth
(86) International application number: PCT/US2022/023862
(87) International publication number: WO 2022/216948

(56) References cited:
- EP-A2- 0 893 155
- US-A1- 2005 080 171
- US-B2- 7 312 260
- US-B2- 7 767 750
- US-B2- 9 416 280

## Description

The disclosed technology relates to compositions including polymeric dispersants having an average of at least two amine groups per molecule, at least partially neutralized (e.g., salted) with a functionalized acid component. Pigment dispersions and ink formulations including these compositions are also described, as well as methods of making and/or using these materials.

Many conventional packaging inks are manufactured around a generic formulation of pigment, binder, adhesion promoter, and solvent. Illustrative ink formulations are described, for example, in JP 2017-39896 A. In many cases, the binder acts as a dispersing aid and prevents re-agglomeration of the pigment particles following milling. However, in other cases, the use of a bespoke dispersant improves the ink properties significantly, such as stability, pigment content and color development. Generally, polymeric dispersants may be acid-functional, amine-functional, or non-ionic. However, non-ionic or acid-based dispersants have been used in this application, due to compatibility problems that may occur when using amine-functional dispersants with other ingredients in the formulation.

A significant pigment used in packaging inks is the pigment Yellow 13. It has been observed that to disperse Yellow 13 using a polymeric dispersant, the functionality of the dispersant is strongly preferred to include amine groups, to provide sufficient anchoring of the dispersant to the pigment's surface. One binder used in packaging inks is nitrocellulose, as seen, for example, in JP 2018-199802 A; it has been found that amine-functional dispersants interact unfavorably with this binder, leading to gel formation over time, which would be catastrophic for a fully-formulated ink composition. Similarly, organometallic complexes, such as titanate, have a long history in the formulation of packaging inks, as seen, for example, in WO 2012/028882 A1, to provide adhesion to low-surface-energy substrates, such as polyethylene or oriented polypropylene, when used in combination with a binder. However, the organometallic complexes are highly vulnerable to unwanted reaction with amine-functional dispersants, again forming gels and/or increasing viscosity.

Polymeric dispersants having a plurality of amine groups are described, for example, in the following documents: US 7,767,750 B2, US 8,859,675 B2, US 8,987,374 B2, and US 9,416,280 B2. These documents do not disclose polymeric dispersants having an average of at least two amine groups per molecule, wherein at least about 60 percent of the amine groups present in the polymeric dispersant are each individually neutralized (e.g., salted) with a molecule of a functionalized acid component.

The disclosed technology, therefore, provides compositions comprising polymeric dispersants having an average of at least two amine groups per molecule, wherein at least about 60 percent of the amine groups present in the polymeric dispersant are each individually neutralized with a molecule of a functionalized acid component, as described herein. It has been found that these compositions may at least partially mitigate the problematic interactions an amine-functional dispersant may have with other ingredients, by forming an amine salt using a sulfonic or phosphoric counter-ion, resulting in suitable performance with certain ingredients, such as additives (e.g., organometallic complexes) and/or binders (e.g., nitrocellulose).

The subject matter disclosed herein provides compositions comprising: (a) a polymeric dispersant comprising: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; and (ii) an average of at least two amine groups per molecule, wherein the at least two amine groups are not present in the at least two polyether pendant groups; and (b) a functionalized acid component comprising sulfonic acid and/or phosphoric acid functionalized with at least one of an aromatic functional group or a fatty functional group; and wherein at least about 60 percent of the amine groups present in the polymeric dispersant are each individually neutralized with a molecule of the functionalized acid component.

Also provided are pigment dispersions comprising: (a) a pigment; (b) a polymeric dispersant for the pigment comprising: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; and (ii) an average of at least two amine groups per molecule, wherein the at least two amine groups are not present in the at least two polyether pendant groups; and (c) a functionalized acid component comprising sulfonic acid and/or phosphoric acid functionalized with at least one of an aromatic functional group or a fatty functional group; and wherein at least about 60 percent of the amine groups present in the polymeric dispersant are each individually neutralized with a molecule of the functionalized acid component.

Also provided are ink formulations comprising: (a) the pigment dispersion(s) described herein; (b) a solvent; (c) a binder; and (d) at least one additional additive.

Also provided are methods of producing pigment dispersions comprising a step of combining, in any order, a pigment, a polymeric dispersant for the pigment, and a functionalized acid component, and an optional step of milling the pigment, wherein: (a) the polymeric dispersant comprises: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; (ii) and an average of at least two amine groups per molecule, wherein the at least two amine groups are not present in the at least two polyether pendant groups; (b) the functionalized acid component comprises sulfonic acid and/or phosphoric acid functionalized with at least one of an aromatic functional group or a fatty functional group; (c) at least about 60 percent of the amine groups present in the polymeric dispersant are each individually neutralized with a molecule of the functionalized acid component; and (d) the optional step of milling the pigment: (i) is not performed; (ii) is performed on the pigment alone prior to addition of the polymeric dispersant and/or the functionalized acid component; or (iii) is performed on a combination of the pigment and the polymeric dispersant and/or the functionalized acid component.

Also provided are methods of manufacturing ink formulation comprising, in order: (a) performing the method(s) of forming pigment dispersion(s) described herein; and (b) adding the following ingredients to the pigment dispersion: (i) a solvent; (ii) a binder; and (iii) at least one additional additive.

Various features and embodiments of the present subject matter will be described below by way of non-limiting illustration.

As used herein, the indefinite article "a"/"an" is intended to mean one or more than one. As used herein, the phrase "at least one" means one or more than one of the following terms. Thus, "a"/"an" and "at least one" may be used interchangeably. For example "at least one of A, B or C" means that just one of A, B or C may be included, and any mixture of two or more of A, B and C may be included, in alternative embodiments.

As used herein, the term "substantially" means that a value of a given quantity is within ±10% of the stated value. In other embodiments, the value is within ±5% of the stated value. In other embodiments, the value is within ±2.5% of the stated value. In other embodiments, the value is within ±1% of the stated value.

As used herein, the term "substantially free of" means that a component does not include any intentional addition of the material which the component is "substantially free of". For example, the component may include a material which the component is "substantially free of" at no more than impurity levels, which may be the result of incomplete chemical reactions and/or unintended/undesired (but perhaps unavoidable) reaction products.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional unrecited elements or steps that do not materially affect the essential or basic and novel characteristics of the composition or method under consideration.

Provided are compositions comprising: (a) a polymeric dispersant comprising: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; and (ii) an average of at least two amine groups per molecule, wherein the at least two amine groups are not present in the at least two polyether pendant groups; and (b) a functionalized acid component comprising sulfonic acid and/or phosphoric acid functionalized with at least one of an aromatic functional group or a fatty functional group; and wherein at least 60 percent of the amine groups present in the polymeric dispersant are each individually neutralized with a molecule of the functionalized acid component. When describing herein an acid component functionalized with at least one of an aromatic functional group or a fatty functional group, what is meant is that the acid component is functionalized with either the aromatic functional group or the fatty functional group, and optionally either of these functional groups is further functionalized by a functional group of the other type. For example, the acid component may be functionalized with an aromatic functional group, and optionally the aromatic functional group may be further functionalized by a fatty functional group, or vice versa.

As used herein, the term "polyether pendant group(s)" refers to polyether groups which are attached to the backbone of the polymeric dispersant. In certain embodiments, the polyether pendant group(s) may be created by joining multiple alkylene oxide monomeric units (such as ethylene oxide and/or propylene oxide monomeric units), perhaps in combination with other monomeric units, together via known methods to form the polyether group, then attaching the polyether group to the backbone via known methods. This method of creating a polymeric dispersant provides the simplest conceptual understanding of what is meant by the terms "polyether pendant group(s)" and "backbone".

In certain embodiments, it is possible to "grow" the polyether pendant group(s) off of the backbone of the polymeric dispersant by adding an alkylene oxide monomeric unit (such as ethylene oxide and/or propylene oxide monomeric units) to the backbone, then successively adding additional alkylene oxide monomeric units (such as ethylene oxide and/or propylene oxide monomeric units) to the first to create the pendant group(s). (This method may result in the same or a very similar polymeric dispersant as that which is created in the method described in the previous paragraph.) In this context, the term "polyether pendant group(s)" would be understood as meaning the portion of the polymeric dispersant which begins with the first alkylene oxide monomeric unit attached to the backbone, and continuing through the additional alkylene oxide monomeric units attached to the first. The "backbone" would then be considered to be those portions of the polymeric dispersant which are not polyether pendant group(s).

In the case of either of the method(s) described in the previous two paragraphs, the polyether pendant group(s) will be terminated with a monomeric unit which will remain relatively unreactive as compared to the monomeric units which make up the bulk of the polyether pendant group(s), as is well known in the art. In certain embodiments, substantially all of the monomeric units of the polyether pendant group(s) may be alkylene oxide monomeric units (such as ethylene oxide and/or propylene oxide monomeric units). By "substantially all", what is meant is: (i) all of the monomeric units of the polyether pendant group(s) other than the terminating monomeric unit are alkylene oxide monomeric units; and/or (ii) a small number of monomeric units may be other than alkylene oxide monomeric units because of unintentional impurities in the monomeric units used to create the polyether pendant group(s).

As used herein, the terms "poly(alkylene oxide) monomeric units" and "alkylene oxide monomeric units" are used interchangeably. Similarly, the terms "poly(ethylene oxide) monomeric units" and "ethylene oxide monomeric units" are used interchangeably, and the terms "poly(propylene oxide) monomeric units" and "propylene oxide monomeric units" are used interchangeably. All of these terms refer to individual monomeric units which are joined together (directly or indirectly) to form the polyether pendant group(s) described herein.

In certain embodiments, the polymeric dispersant comprises an average of from 2 (such as 3, 4, 5, 6, 7, 8, 9, 10, 12, 14, 16, 18, 20, 25, 30, 35, 40, 45, 50, or 55) to 200 (such as 190, 180, 170, 160, 150, 140, 130, 120, 110, 100, 95, 90, 85, 80, 75, 70, 65, or 60) polyether pendant groups per molecule. In certain embodiments, the polymeric dispersant comprises an average of from 2 (such as 3, 4, 5, 6, 7, 8, 9, 10, 12, 14, 16, 18, 20, 25, 30, 35, 40, 45, 50, 55, 60, 65, 70, 75, 80, 85, 90, 95, or 100) to 200 (such as 190, 180, 170, 160, 150, 140, 130, 120, or 110) polyether pendant groups per molecule.

In certain embodiments, from 50% to substantially all of the monomeric units of the polyether pendant groups are poly(ethylene oxide) monomeric units and/or poly(propylene oxide) monomeric units. In certain embodiments, substantially all of the monomeric units of the polyether pendant groups are poly(ethylene oxide) monomeric units and/or poly(propylene oxide) monomeric units. In certain embodiments, from 50% (such as 55%, 60%, 65%, 70%, 75%, 80%, 85%, 90%, or 95%) to 99% of the monomeric units of the polyether pendant groups are poly(ethylene oxide) monomeric units and/or poly(propylene oxide) monomeric units. In certain embodiments, from 50% (such as 55%, 60%, 65%, 70%, 75%, 80%, 85%, or 90%) to 95% of the monomeric units of the polyether pendant groups are poly(ethylene oxide) monomeric units and/or poly(propylene oxide) monomeric units. In certain embodiments, from 50% (such as 55%, 60%, 65%, 70%, 75%, 80%, or 85%) to 90% of the monomeric units of the polyether pendant groups are poly(ethylene oxide) monomeric units and/or poly(propylene oxide) monomeric units. In certain embodiments, from 50% (such as 55%, 60%, 65%, 70%, 75%, or 80%) to 85% of the monomeric units of the polyether pendant groups are poly(ethylene oxide) monomeric units and/or poly(propylene oxide) monomeric units. In certain embodiments, from 50% (such as 55%, 60%, 65%, 70%, or 75%) to 80% of the monomeric units of the polyether pendant groups are poly(ethylene oxide) monomeric units and/or poly(propylene oxide) monomeric units. In certain embodiments, from 50% (such as 55%, 60%, 65%, or 70%) to 75% of the monomeric units of the polyether pendant groups are poly(ethylene oxide) monomeric units and/or poly(propylene oxide) monomeric units. In certain embodiments, from 50% (such as 55%, 60%, or 65%) to 70% of the monomeric units of the polyether pendant groups are poly(ethylene oxide) monomeric units and/or poly(propylene oxide) monomeric units. In certain embodiments, from 50% (such as 55%, or 60%) to 65% of the monomeric units of the polyether pendant groups are poly(ethylene oxide) monomeric units and/or poly(propylene oxide) monomeric units. In certain embodiments, from 50% (such as 55%) to 60% of the monomeric units of the polyether pendant groups are poly(ethylene oxide) monomeric units and/or poly(propylene oxide) monomeric units. In certain embodiments, from 50% to 55% of the monomeric units of the polyether pendant groups are poly(ethylene oxide) monomeric units and/or poly(propylene oxide) monomeric units.

In certain embodiments, the ratio of the number of poly(ethylene oxide) monomeric units to the number of poly(propylene oxide) monomeric units is from 0:100 (such as 10:90 or 20:80) to 100:0 (such as 90:10, 80:20, 70:30, 60:40, 50:50, 40:60, or 30:70). In certain embodiments, the ratio of the number of poly(ethylene oxide) monomeric units to the number of poly(propylene oxide) monomeric units is 0:100, 10:90, 17:83, 20:80, 30:70, 40:60, 50:50, 60:40, 70:30, 80:20, 90:10, or 100:0.

In certain embodiments, the polyether pendant groups make up at least 65 (such as 70, 75, 80, 85, 90, or 95) weight percent of the polymeric dispersant, based on the total weight of the polymeric dispersant. In certain embodiments, the polyether pendant groups make up from 65 (such as 70, 75, 80, 85, or 90) to 95 weight percent of the polymeric dispersant, based on the total weight of the polymeric dispersant. In certain embodiments, the polyether pendant groups make up from 65 (such as 70, 75, 80, or 85) to 90 weight percent of the polymeric dispersant, based on the total weight of the polymeric dispersant. In certain embodiments, the polyether pendant groups make up from 65 (such as 70, 75, or 80) to 85 weight percent of the polymeric dispersant, based on the total weight of the polymeric dispersant. In certain embodiments, the polyether pendant groups make up from 65 (such as 70, or 75) to 80 weight percent of the polymeric dispersant, based on the total weight of the polymeric dispersant. In certain embodiments, the polyether pendant groups make up from 65 (such as 70) to 75 weight percent of the polymeric dispersant, based on the total weight of the polymeric dispersant. In certain embodiments, the polyether pendant groups make up from 65 to 70 weight percent of the polymeric dispersant, based on the total weight of the polymeric dispersant. In certain embodiments, the polyether pendant groups make up 65 (such as 70, 75, 80, 85, 90, or 95) weight percent of the polymeric dispersant, based on the total weight of the polymeric dispersant.

In certain embodiments, the polymeric dispersant comprises an average of from 2 (such as 3, 4, 5, 6, 7, 8, 9, 10, 12, 14, 16, 18, 20, 25, 30, 35, 40, 45, 50, 55, 60, 65, 70, 75, 80, 85, 90, 95, 100, 110, 120, 130, 140, 150, 160, 170, 180, 190, 200, 210, 220, 230, or 240) to 500 (such as 490, 480, 470, 460, 450, 440, 430, 420, 410, 400, 390, 380, 370, 360, 350, 340, 330, 320, 310, 300, 290, 280, 270, 260, or 250) amine groups per molecule. In certain embodiments, the polymeric dispersant comprises an average of from 2 (such as 3, 4, 5, 6, 7, 8, 9, 10, 12, 14, 16, 18, 20, 25, 30, 35, 40, 45, 50, 55, 60, 65, 70, 75, 80, 85, 90, 95, 100, 110, 120, 130, 140, 150, 160, 170, 180, or 190) to 500 (such as 490, 480, 470, 460, 450, 440, 430, 420, 410, 400, 390, 380, 370, 360, 350, 340, 330, 320, 310, 300, 290, 280, 270, 260, 250, 240, 230, 220, 210, or 200) amine groups per molecule. In certain embodiments, the polymeric dispersant comprises an average of from 2 (such as 3, 4, 5, 6, 7, 8, 9, 10, 12, 14, 16, 18, 20, 25, 30, 35, 40, 45, 50, 55, 60, 65, 70, 75, 80, 85, 90, 95, 100, 110, 120, 130, 140, 150, 160, 170, 180, 190, 200, 210, 220, 230, 240, 250, 260, 270, 280, or 290) to 500 (such as 490, 480, 470, 460, 450, 440, 430, 420, 410, 400, 390, 380, 370, 360, 350, 340, 330, 320, 310, or 300) amine groups per molecule.

In certain embodiments, the functionalized acid component comprises sulfonic acid functionalized with at least one of an aromatic functional group or a fatty functional group.

In certain embodiments, the functionalized acid component comprises dodecyl benzene sulfonic acid. An illustrative commercially-available dodecyl benzene sulfonic acid is Maranil^{®} DBS/LC, available from BASF.

In certain embodiments, the aromatic functional group is an optionally substituted C₆-C₁₀ aromatic group. In certain embodiments, the aromatic functional group is a C₆-C₁₀ aromatic group. In certain embodiments, the aromatic functional group is a substituted C₆-C₁₀ aromatic group. In certain embodiments, the aromatic functional group is an optionally substituted C₈-C₁₀ aromatic group. In certain embodiments, the aromatic functional group is a C₈-C₁₀ aromatic group. In certain embodiments, the aromatic functional group is a substituted C₈-C₁₀ aromatic group. In certain embodiments, the aromatic functional group is an optionally substituted C₆-C₈ aromatic group. In certain embodiments, the aromatic functional group is a C₆-C₈ aromatic group. In certain embodiments, the aromatic functional group is a substituted C₆-C₈ aromatic group. In certain embodiments, the aromatic functional group is an optionally substituted C₆ aromatic group. In certain embodiments, the aromatic functional group is a C₆ aromatic group. In certain embodiments, the aromatic functional group is a substituted C₆ aromatic group. In certain embodiments, the aromatic functional group is an optionally substituted C₈ aromatic group. In certain embodiments, the aromatic functional group is a C₈ aromatic group. In certain embodiments, the aromatic functional group is a substituted C₈ aromatic group. In certain embodiments, the aromatic functional group is an optionally substituted C₁₀ aromatic group. In certain embodiments, the aromatic functional group is a C₁₀ aromatic group. In certain embodiments, the aromatic functional group is a substituted C₁₀ aromatic group.

In certain embodiments, the fatty functional group is a linear or branched, saturated or unsaturated, C₈-C₂₂ hydrocarbon group. In certain embodiments, the fatty functional group is a linear or branched, saturated or unsaturated, C₈-C₂₀ hydrocarbon group. In certain embodiments, the fatty functional group is a linear or branched, saturated or unsaturated, C₈-C₁₈ hydrocarbon group. In certain embodiments, the fatty functional group is a linear or branched, saturated or unsaturated, C₈-C₁₆ hydrocarbon group. In certain embodiments, the fatty functional group is a linear or branched, saturated or unsaturated, C₈-C₁₄ hydrocarbon group. In certain embodiments, the fatty functional group is a linear or branched, saturated or unsaturated, C₈-C₁₂ hydrocarbon group. In certain embodiments, the fatty functional group is a linear or branched, saturated or unsaturated, C₈-C₁₀ hydrocarbon group. In certain embodiments, the fatty functional group is a linear or branched, saturated or unsaturated, C₈ hydrocarbon group. In certain embodiments, the fatty functional group is a linear or branched, saturated or unsaturated, C₁₀-C₂₂ hydrocarbon group. In certain embodiments, the fatty functional group is a linear or branched, saturated or unsaturated, C₁₀-C₂₀ hydrocarbon group. In certain embodiments, the fatty functional group is a linear or branched, saturated or unsaturated, C₁₀-C₁₈ hydrocarbon group. In certain embodiments, the fatty functional group is a linear or branched, saturated or unsaturated, C₁₀-C₁₆ hydrocarbon group. In certain embodiments, the fatty functional group is a linear or branched, saturated or unsaturated, C₁₀-C₁₄ hydrocarbon group. In certain embodiments, the fatty functional group is a linear or branched, saturated or unsaturated, C₁₀-C₁₂ hydrocarbon group. In certain embodiments, the fatty functional group is a linear or branched, saturated or unsaturated, C₁₀ hydrocarbon group. In certain embodiments, the fatty functional group is a linear or branched, saturated or unsaturated, C₁₂-C₂₂ hydrocarbon group. In certain embodiments, the fatty functional group is a linear or branched, saturated or unsaturated, C₁₂-C₂₀ hydrocarbon group. In certain embodiments, the fatty functional group is a linear or branched, saturated or unsaturated, C₁₂-C₁₈ hydrocarbon group. In certain embodiments, the fatty functional group is a linear or branched, saturated or unsaturated, C₁₂-C₁₆ hydrocarbon group. In certain embodiments, the fatty functional group is a linear or branched, saturated or unsaturated, C₁₂-C₁₄ hydrocarbon group. In certain embodiments, the fatty functional group is a linear or branched, saturated or unsaturated, C₁₂ hydrocarbon group. In certain embodiments, the fatty functional group is a linear or branched, saturated or unsaturated, C₁₄-C₂₂ hydrocarbon group. In certain embodiments, the fatty functional group is a linear or branched, saturated or unsaturated, C₁₄-C₂₀ hydrocarbon group. In certain embodiments, the fatty functional group is a linear or branched, saturated or unsaturated, C₁₄-C₁₈ hydrocarbon group. In certain embodiments, the fatty functional group is a linear or branched, saturated or unsaturated, C₁₄-C₁₆ hydrocarbon group. In certain embodiments, the fatty functional group is a linear or branched, saturated or unsaturated, C₁₄ hydrocarbon group. In certain embodiments, the fatty functional group is a linear or branched, saturated or unsaturated, C₁₆-C₂₂ hydrocarbon group. In certain embodiments, the fatty functional group is a linear or branched, saturated or unsaturated, C₁₆-C₂₀ hydrocarbon group. In certain embodiments, the fatty functional group is a linear or branched, saturated or unsaturated, C₁₆-C₁₈ hydrocarbon group. In certain embodiments, the fatty functional group is a linear or branched, saturated or unsaturated, C₁₆ hydrocarbon group. In certain embodiments, the fatty functional group is a linear or branched, saturated or unsaturated, C₁₈-C₂₂ hydrocarbon group. In certain embodiments, the fatty functional group is a linear or branched, saturated or unsaturated, C₁₈-C₂₀ hydrocarbon group. In certain embodiments, the fatty functional group is a linear or branched, saturated or unsaturated, C₁₈ hydrocarbon group. In certain embodiments, the fatty functional group is a linear or branched, saturated or unsaturated, C₂₀-C₂₂ hydrocarbon group. In certain embodiments, the fatty functional group is a linear or branched, saturated or unsaturated, C₂₀ hydrocarbon group. In certain embodiments, the fatty functional group is a linear or branched, saturated or unsaturated, C₂₂ hydrocarbon group.

In certain embodiments, the functionalized acid component comprises at least one compound according to the following general formula: 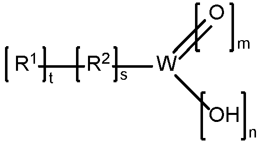 wherein:
R¹ is a linear or branched, saturated or unsaturated, C₈-C₂₂ hydrocarbon group (in alternative embodiments, R¹ may be a hydrocarbon group of one of the various embodiments described above);
R² is an aromatic functional group, optionally a substituted C₆-C₁₀ aromatic group (in alternative embodiments, R² may be an aromatic group of one of the various embodiments described above);
W is phosphorus or sulfur;
m is 1 or 2, wherein m is 1 or 2 when W is sulfur, and m is 1 when W is phosphorus;
n is 1 or 2, wherein n is 1 when W is sulfur, and n is 2 when W is phosphorus;
s is 0 or 1;
t is 0 or 1;
with the proviso that s and t cannot both be 0.

In certain embodiments, W is sulfur. In certain embodiments, W is phosphorus. In certain embodiments, W is sulfur, m is 1, and n is 1. In certain embodiments, W is sulfur, m is 2 and n is 1. In certain embodiments, W is phosphorus, m is 1 and n is 2.

In certain embodiments, s is 1 and t is 1. In certain embodiments, s is 0 and t is 1. In certain embodiments, s is 1 and t is 0.

In certain embodiments, at least 60 (such as 65, 70, 75, 80, 85, 90, or 95) percent of the amine groups present in the polymeric dispersant are each individually neutralized with a molecule of the functionalized acid component. In certain embodiments, substantially all of the amine groups present in the polymeric dispersant are each individually neutralized with a molecule of the functionalized acid component. In this context, "substantially all" means that the number of amine groups neutralized with a molecule of the functionalized acid component is as high as physically/chemically possible in the circumstances.

As present in the polymeric dispersant, each amine group may independently be primary, secondary, or tertiary. In certain embodiments, it may be undesirable for the amine group to be present within a polyether pendant group, as it may cause the polyether pendant group to prefer to associate with the pigment surface rather than solvate in the liquid medium, or otherwise render the polyether pendant group unsuitable for its purpose of dispersing a pigment (affiliated with the amine group(s) of the backbone) into a liquid medium.

Suitable polymeric dispersants according to the present subject matter are disclosed, for example, in US 7,767,750 B2, US 8,859,675 B2, US 8,987,374 B2, and US 9,416,280 B2. It is noted that these documents may disclose polymeric dispersants which are outside the scope of the broadest embodiments of the present subject matter; with that caveat, these documents disclose many embodiments of suitable polymeric dispersants which fall within the scope of the present subject matter, and are therefore illustrative of the polymeric dispersants described herein.

In certain embodiments, the composition(s) described above does not include materials which would interfere with the neutralization of the amine groups with the functionalized acid component. In certain embodiments, materials which may interfere with the neutralization of the amine groups with the functionalized acid component are not added to the composition(s) described herein until after the desired amount of neutralization has occurred.

Also provided are pigment dispersions comprising: (a) a pigment; (b) a polymeric dispersant for the pigment comprising: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; and (ii) an average of at least two amine groups per molecule, wherein the at least two amine groups are not present in the at least two polyether pendant groups; and (c) a functionalized acid component comprising sulfonic acid and/or phosphoric acid functionalized with at least one of an aromatic functional group or a fatty functional group; and wherein at least 60 percent of the amine groups present in the polymeric dispersant are each individually neutralized with a molecule of the functionalized acid component. In certain embodiments, the pigment dispersion(s) comprise: (a) a pigment; and (b) any one of the compositions described hereinabove.

Further provided are ink formulations comprising: (a) the pigment dispersion(s) described hereinabove; (b) a solvent; (c) a binder; and (d) at least one additional additive.

In certain embodiments, the solvent is a polar solvent.

In certain embodiments, the binder is a polymeric binder.

In certain embodiments, the at least one additional additive comprises from 1 to 5 additional additives.

In certain embodiments, the at least one additional additive comprises at least one of a wetting agent, a stabilizing agent, an adhesion promoter, a wax, or a defoamer.

In certain embodiments, materials which may interfere with the neutralization of the amine groups with the functionalized acid component are not added to the ink formulation(s) described herein until after the desired amount of neutralization has occurred.

Also provided are methods of producing a pigment dispersion comprising a step of combining, in any order, a pigment, a polymeric dispersant for the pigment, and a functionalized acid component, and an optional step of milling the pigment, wherein: (a) the polymeric dispersant comprises: (i) an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; (ii) and an average of at least two amine groups per molecule, wherein the at least two amine groups are not present in the at least two polyether pendant groups; (b) the functionalized acid component comprises sulfonic acid and/or phosphoric acid functionalized with at least one of an aromatic functional group or a fatty functional group; (c) at least 60 percent of the amine groups present in the polymeric dispersant are each individually neutralized with a molecule of the functionalized acid component; and (d) the optional step of milling the pigment: (i) is not performed; (ii) is performed on the pigment alone prior to addition of the polymeric dispersant and/or the functionalized acid component; or (iii) is performed on a combination of the pigment and the polymeric dispersant and/or the functionalized acid component.

In certain embodiments, the polymeric dispersant and the functionalized acid component are combined prior to addition of the pigment, wherein the optional step of milling the pigment is performed before or after the pigment is added to the combination of the polymeric dispersant and the functionalized acid component. In certain embodiments, the polymeric dispersant and the functionalized acid component are combined prior to addition of the pigment, wherein the step of milling the pigment is performed before or after the pigment is added to the combination of the polymeric dispersant and the functionalized acid component. In certain embodiments, the polymeric dispersant and the functionalized acid component are combined prior to addition of the pigment, wherein the step of milling the pigment is performed before the pigment is added to the combination of the polymeric dispersant and the functionalized acid component. In certain embodiments, the polymeric dispersant and the functionalized acid component are combined prior to addition of the pigment, wherein the step of milling the pigment is performed after the pigment is added to the combination of the polymeric dispersant and the functionalized acid component.

In certain embodiments, the polymeric dispersant and the pigment are combined, the optional step of milling the pigment is performed on the combination of the polymeric dispersant and the pigment, and then the functionalized acid component is added to the pigment composition. In certain embodiments, the polymeric dispersant and the pigment are combined, the step of milling the pigment is performed on the combination of the polymeric dispersant and the pigment, and then the functionalized acid component is added to the pigment composition.

In certain embodiments, the polymeric dispersant for the pigment and the functionalized acid component may together be made up of any one of the compositions described hereinabove.

Further provided are methods of manufacturing an ink formulation comprising, in order: (a) performing the method(s) of producing a pigment dispersion described above to form a pigment dispersion; and (b) adding the following ingredients to the pigment dispersion: (i)a solvent; (ii) a binder; and (iii) at least one additional additive.

In certain embodiments, the solvent is a polar solvent.

In certain embodiments, the binder is a polymeric binder.

In certain embodiments, the at least one additional additive comprises from 1 to 5 additional additives.

In certain embodiments, the at least one additional additive comprises at least one of a wetting agent, a stabilizing agent, an adhesion promoter, a wax, or a defoamer.

In certain embodiments of the method(s) described above, materials which may interfere with the neutralization of the amine groups with the functionalized acid component are not added to the ink formulation(s) described herein until after the desired amount of neutralization has occurred. Such materials may include resins, binders, and/or additional additives, as would be apparent to a person of ordinary skill in the art.

The subject matter disclosed herein may be better understood with reference to the following examples, which are set forth merely to further illustrate the subject matter disclosed herein. The illustrative examples should not be construed as limiting the subject matter in any manner.

Comparative Example 1: Example 1 from US 7,767,750 B2, issued August 3, 2010 to inventor Dean Thetford and assignee The Lubrizol Corporation, column 11, lines 35-57.

Comparative Example 2: Intermediate A was made by charging 200 parts SURFONAMINE^{®} B-200 polyetheramine (from Huntsman International LLC) to a reaction vessel with 11.6 parts 2-hydroxyethyl acrylate and 0.03 parts 2,6-di-tertbutyl-4-methyl phenol, followed by stirring for 48 hours at 70 °C. 250 parts ethyl acetate and 67.6 parts tolylene-2,4-diisocyanate were charged to a separate reaction vessel under nitrogen, followed by agitation and charging 289.7 parts of Intermediate A and 125 parts ethyl acetate over 10 minutes. Then 15.78 parts 1,1'-((3-(dimethylamino)propyl)imino)bis(2-propanol) and 32.55 parts ethyl acetate were charged to the vessel over 10 minutes. Then the mixture was heated to 65 °C for one hour, followed by charging 95.13 parts SURFONAMINE^{®} B-200 polyetheramine and 94.7 parts ethyl acetate, followed by stirring at 65 °C for an additional two hours to yield the dispersant of Comparative Example 2.

Comparative Example 3: A dispersant was produced according to the process described in Example 7 from US 9,416,280 B2, issued August 16, 2016 to inventor Stuart N. Richards and Assignee Lubrizol Limited, column 11, lines 45-53 (with reference to Comparative Example C at column 10, lines 25-48), using 24 parts EF60, 50 parts Jeffamine M2005 and 0.93 parts DMAPA in ethyl acetate. The resulting mixture was adjusted to 40.0 weight percent solids by addition of extra ethyl acetate.

Comparative Example 4: A dispersant was produced by adding 0.25 parts acetic acid to 1.75 parts of Comparative Example 1, followed by mechanical stirring for about 1 minute until the material appeared homogenous, after which the vessel was placed on a set of rollers to provide gentle mixing for about 30 minutes.

Comparative Example 5: A dispersant was produced by adding 0.13 parts benzoic acid to 1.87 parts of Comparative Example 1, followed by mechanical stirring for about 1 minute until the material appeared homogenous, after which the vessel was placed on a set of rollers to provide gentle mixing for about 30 minutes.

Example 1: A mixture of 225 parts of Comparative Example 1 and 309.38 parts ethanol was stirred at 50 °C for 1 hour, followed by adding 84.38 parts dodecylbenzenesulfonic acid and stirring for an additional hour at 50 °C, to create a dispersant.

Example 2: A mixture of 6.15 parts of Comparative Example 2 and 22.48 parts ethanol was mechanically stirred for about 1 minute until the material appeared homogenous, after which the vessel was placed on a set of rollers to provide gentle mixing for about 30 minutes. Then, 0.47 parts dodecylbenzenesulfonic acid was added to the mixture, followed by mechanical stirring for about 1 minute until the material appeared homogenous, after which the vessel was placed on a set of rollers to provide gentle mixing for about 30 minutes, to create a dispersant.

Example 3: A mixture of 7.14 parts of Comparative Example 3, 19.52 parts ethanol, and 2.17 parts ethyl acetate, was mechanically stirred for about 1 minute until the material appeared homogenous, after which the vessel was placed on a set of rollers to provide gentle mixing for about 30 minutes. Then, 0.47 parts dodecylbenzenesulfonic acid was added to the mixture, followed by mechanical stirring for about 1 minute until the material appeared homogenous, after which the vessel was placed on a set of rollers to provide gentle mixing for about 30 minutes, to create a dispersant.

Example 4: 35 parts of Comparative Example 3 were charged to a reaction flask and stirred under nitrogen, 0.21 parts of Benzenesulfonic acid were charged to the reaction vessel along with 0.21 parts of ethyl acetate, the reaction mixture was then heated to 50°C for 1 hour with a conder fitted to the flask, to create a dispersant.

Example 5: 35 parts of Comparative Example 3 were charged to a reaction flask and stirred under nitrogen, 0.21 parts of Phenylphosphonic acid were charged to the reaction vessel along with 0.21 parts of ethyl acetate, the reaction mixture was then heated to 50°C for 1 hour with a conder fitted to the flask, to create a dispersant.

To determine whether a particular dispersant may be suitable for use in an ink (such as an ink used in printing packaging materials), two types of experiments may be conducted: a Compatibility Test and one or both of Dispersion Test A and Dispersion Test B, as described below. A particular dispersant may be deemed suitable for use in a (packaging) ink if it passes the Compatibility Test and at least one of Dispersion Test A or Dispersion Test B.

Each of the dispersants described in the Examples and Comparative Examples above were tested according to the Compatibility Test and one of Dispersion Test A or Dispersion Test B, with the results reported in Table 1, below. The Compatibility Test is a measure of whether a dispersant is compatible with the ink medium. Dispersion Test A and Dispersion Test B are methods of determining whether a dispersant is capable of dispersing a particular pigment, and each test may be representative of whether other similar pigments may pass the same test, and may thus indicate that a dispersant is suitable for use with other similar pigments. Therefore, passing the Compatibility Test and at least one of Dispersion Test A or Dispersion Test B will indicate that a particular dispersant is suitable for use with at least one type of pigment.

Compatibility Test ("CT"): Four parts of a nitrocellulose varnish (DLX 3-5 from Nobel NC Co., Ltd.) was dissolved in five parts ethanol and one part ethyl acetate to make the varnish solution. Separately, two parts of the dispersant were dissolved in three parts of an ethanol solvent. Five parts of the varnish solution was added to the mixture and stirred, followed by addition of two parts of an organic titanate (TYZOR^{®} IAM from Dorf Ketal Chemicals India Pvt Ltd) and stirring until homogenous. After a two-week storage period at room temperature, the mixture was observed, and any gel formation and/or turbidity was noted as a failure of the Compatibility Test, while a flowable clear fluid was noted as a pass of the Compatibility Test.

Dispersion Test B ("DTB"): 3.39 parts of the dispersant was dissolved in 22.48 parts ethanol and 3.39 parts ethyl acetate. 15.75 parts of pigment Blue 15:4 were added and stirred to wet-out the pigment. 125 parts of 3 mm glass beads were added, and the resulting mixture was dispersed using a DAS 200 disperser (available from LAU GmbH) for one hour to produce a millbase. The viscosity of the millbase was measured using a TA rheometer using a parallel plate setup at 25 °C with a 250 µm gap. A viscosity value equivalent to or above 2 Pa·s at a shear rate of 38 s⁻¹ was considered a failure of Dispersion Test B, while a value below 2 Pa·s at a shear rate of 38 s⁻¹ was considered a pass of Dispersion Test B.

**Table 1**

| | CT | DTA | DTB | Overall |
|---|---|---|---|---|
| Comp. Ex. 1 | Gelled - Fail | 0.26 Pa·s - Pass | | Fail |
| Example 1 | Fluid - Pass | 0.99 Pa·s - Pass | | Pass |
| Comp. Ex. 2 | Gelled - Fail | | 0.08 Pa·s - Pass | Fail |
| Example 2 | Fluid - Pass | | 0.39 Pa·s - Pass | Pass |
| Comp. Ex. 3 | Gelled - Fail | | 0.07 Pa·s - Pass | Fail |
| Example 3 | Fluid - Pass | | 1.06 Pa·s - Pass | Pass |
| Comp. Ex. 4 | Gelled - Fail | 2.09 Pa·s - Fail | | Fail |
| Comp. Ex. 5 | Gelled - Fail | 2.77 Pa·s - Fail | | Fail |
| Example 4 | Fluid - Pass | | 0.65 Pa·s - Pass | Pass |
| Example 5 | Fluid - Pass | | 0.22 Pa·s - Pass | Pass |

Except in the Examples, or where otherwise explicitly indicated or required by context, all numerical quantities in this description specifying amounts of materials, reaction conditions, molecular weights, number of carbon atoms, and the like, are to be understood as modified by the word "about". As used herein, the term "about" means that a value of a given quantity is within ±20% of the stated value. In other embodiments, the value is within ±15% of the stated value. In other embodiments, the value is within ±10% of the stated value. In other embodiments, the value is within ±5% of the stated value. In other embodiments, the value is within ±2.5% of the stated value. In other embodiments, the value is within ±1% of the stated value. In other embodiments, the value is within a range of the explicitly-described value which would be understood by those of ordinary skill, based on the disclosures provided herein, to perform substantially similarly to compositions including the literal amounts described herein.

It is to be understood that the upper and lower amount, range, and ratio limits set forth herein may be independently combined, and that any amount within a disclosed range is contemplated to provide a minimum or maximum of a narrower range in alternative embodiments (with the proviso, of course, that the minimum amount of a range must be lower than the maximum amount of the same range). Similarly, the ranges and amounts for each element of the subject matter disclosed herein may be used together with ranges or amounts for any of the other elements.

## Claims

1. A composition comprising:
a. a polymeric dispersant comprising:
i. an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant; and
ii. an average of at least two amine groups per molecule, wherein the at least two amine groups are not present in the at least two polyether pendant groups; and
b. a functionalized acid component comprising sulfonic acid and/or phosphoric acid functionalized with at least one of an aromatic functional group or a fatty functional group; and
wherein at least 60 percent of the amine groups present in the polymeric dispersant are each individually neutralized with a molecule of the functionalized acid component.

2. The composition of claim 1, wherein the polymeric dispersant comprises an average of from 2 to 200 polyether pendant groups per molecule.

3. The composition of either claim 1 or claim 2, wherein from 50% to substantially all of the monomeric units of the polyether pendant groups are poly(ethylene oxide) monomeric units and/or poly(propylene oxide) monomeric units.

4. The composition of any one of claims 1 to 3, wherein the ratio of the number of poly(ethylene oxide) monomeric units to the number of poly(propylene oxide) monomeric units is from 0:100 to 90:10.

5. The composition of any one of claims 1 to 4, wherein the polyether pendant groups make up at least 65 weight percent of the polymeric dispersant, based on the total weight of the polymeric dispersant.

6. The composition of any one of claims 1 to 5, wherein the polymeric dispersant comprises an average of from 2 to 500 amine groups per molecule.

7. The composition of any one of claims 1 to 6, wherein the functionalized acid component comprises sulfonic acid functionalized with at least one of an aromatic functional group or a fatty functional group.

8. The composition of any one of claims 1 to 7, wherein the functionalized acid component comprises dodecyl benzene sulfonic acid.

9. The composition of any one of claims 1 to 8, wherein the aromatic functional group is an optionally substituted C₆-C₁₀ aromatic group.

10. The composition of any one of claims 1 to 9, wherein the fatty functional group is a linear or branched, saturated or unsaturated, C₈-C₂₂ hydrocarbon group.

11. The composition of any one of claims 1 to 6, wherein the functionalized acid component comprises at least one compound according to the following general formula: 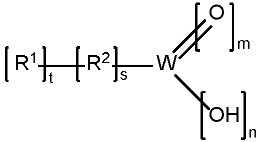 wherein:
R¹ is a linear or branched, saturated or unsaturated, C₈-C₂₂ hydrocarbon group;
R² is an aromatic functional group, optionally a substituted C₆-C₁₀ aromatic group;
W is phosphorus or sulfur;
m is 1 or 2, wherein m is 1 or 2 when W is sulfur, and m is 1 when W is phosphorus;
n is 1 or 2, wherein n is 1 when W is sulfur, and n is 2 when W is phosphorus;
s is 0 or 1;
t is 0 or 1;
with the proviso that s and t cannot both be 0.

12. The composition of claim 11, wherein W is sulfur.

13. The composition of either claim 11 or claim 12, wherein s is 1 and t is 1.

14. The composition of any one of claims 1 to 13, wherein at least about 75 percent of the amine groups present in the polymeric dispersant are each individually neutralized with a molecule of the functionalized acid component.

15. The composition of any one of claims 1 to 14, wherein at least about 95 percent of the amine groups present in the polymeric dispersant are each individually neutralized with a molecule of the functionalized acid component.

16. A pigment dispersion comprising:
a. a pigment; and
b. a polymeric dispersant for the pigment, the polymeric dispersant comprising the composition of any one of claims 1 to 15.

17. An ink formulation comprising:
a. the pigment dispersion of claim 16;
b. a solvent;
c. a binder; and
d. at least one additional additive.

18. A method of producing a pigment dispersion comprising a step of combining, in any order, a pigment, a polymeric dispersant for the pigment, and a functionalized acid component, and an optional step of milling the pigment, wherein:
a. the polymeric dispersant comprises:
i. an average of at least two polyether pendant groups per molecule, wherein the at least two polyether pendant groups are made up of monomeric units, wherein at least half of the monomeric units are poly(ethylene oxide) monomeric units and/or poly(propylene oxide) monomeric units, and wherein the at least two polyether pendant groups make up at least 50 weight percent of the polymeric dispersant, based on the total weight of the polymeric dispersant;
ii. and an average of at least two amine groups per molecule, wherein the at least two amine groups are not present in the at least two polyether pendant groups;
b. the functionalized acid component comprises sulfonic acid and/or phosphoric acid functionalized with at least one of an aromatic functional group or a fatty functional group;
c. at least 60 percent of the amine groups present in the polymeric dispersant are each individually neutralized with a molecule of the functionalized acid component; and
d. the optional step of milling the pigment:
i. is not performed;
ii. is performed on the pigment alone prior to addition of the polymeric dispersant and/or the functionalized acid component; or
iii. is performed on a combination of the pigment and the polymeric dispersant and/or the functionalized acid component.

19. The method of claim 18, wherein the polymeric dispersant and the functionalized acid component are combined prior to addition of the pigment, wherein the optional step of milling the pigment is performed before or after the pigment is added to the combination of the polymeric dispersant and the functionalized acid component.

20. The method of claim 18, wherein the polymeric dispersant and the pigment are combined, the optional step of milling the pigment is performed on the combination of the polymeric dispersant and the pigment, and then the functionalized acid component is added to the pigment composition.

## Patentansprüche

1. Zusammensetzung, umfassend:
a. ein polymeres Dispergiermittel, umfassend:
i. einen Durchschnitt von mindestens zwei Polyetherseitengruppen pro Molekül, wobei die mindestens zwei Polyetherseitengruppen aus Monomereinheiten bestehen, wobei mindestens eine Hälfte der Monomereinheiten Poly(ethylenoxid)-Monomereinheiten und/oder Poly(propylenoxid)-Monomereinheiten sind, und wobei die mindestens zwei Polyetherseitengruppen mindestens 50 Gewichtsprozent des polymeren Dispersionsmittels ausmachen, basierend auf dem Gesamtgewicht des polymeren Dispersionsmittels; und
ii. einen Durchschnitt von mindestens zwei Amingruppen pro Molekül, wobei die mindestens zwei Amingruppen nicht in den mindestens zwei Polyetherseitengruppen vorhanden sind; und
b. eine funktionalisierte Säurekomponente, umfassend Sulfonsäure und/oder Phosphorsäure, die mit mindestens einer aromatischen funktionellen Gruppe oder einer fettfunktionellen Gruppe funktionalisiert ist; und
wobei mindestens 60 Prozent der Amingruppen, die in dem polymeren Dispergiermittel vorhanden sind, jeweils einzeln mit einem Molekül der funktionalisierten Säurekomponente neutralisiert sind.

2. Zusammensetzung nach Anspruch 1, wobei das polymere Dispergiermittel einen Durchschnitt von 2 bis 200 Polyetherseitengruppen pro Molekül umfasst.

3. Zusammensetzung nach Anspruch 1 oder 2, wobei von 50 % bis im Wesentlichen alle der Monomereinheiten der Polyetherseitengruppen Poly(ethylenoxid)-Monomereinheiten und/oder Poly(propylenoxid)-Monomereinheiten sind.

4. Zusammensetzung nach einem der Ansprüche 1 bis 3, wobei das Verhältnis der Anzahl der Poly(ethylenoxid)-Monomereinheiten zu der Anzahl der Poly(propylenoxid)-Monomereinheiten von 0 : 100 bis 90 : 10 beträgt.

5. Zusammensetzung nach einem der Ansprüche 1 bis 4, wobei die Polyetherseitengruppen mindestens 65 Gewichtsprozent des polymeren Dispergiermittels ausmachen, basierend auf dem Gesamtgewicht des polymeren Dispergiermittels.

6. Zusammensetzung nach einem der Ansprüche 1 bis 5, wobei das polymere Dispergiermittel einen Durchschnitt von 2 bis 500 Amingruppen pro Molekül umfasst.

7. Zusammensetzung nach einem der Ansprüche 1 bis 6, wobei die funktionalisierte Säurekomponente eine Sulfonsäure umfasst, die mit mindestens einer aromatischen funktionellen Guppe oder einer fettfunktionellen Gruppe funktionalisiert ist.

8. Zusammensetzung nach einem der Ansprüche 1 bis 7, wobei die funktionalisierte Säurekomponente Dodecylbenzolsulfonsäure umfasst.

9. Zusammensetzung nach einem der Ansprüche 1 bis 8, wobei die aromatische funktionelle Gruppe eine optional substituierte aromatische C₆-C₁₀-Gruppe ist.

10. Zusammensetzung nach einem der Ansprüche 1 bis 9, wobei die fettfunktionelle Gruppe eine lineare oder verzweigte, gesättigte oder ungesättigte, C₈-C₂₂-Kohlenwasserstoffgruppe ist.

11. Zusammensetzung nach einem der Ansprüche 1 bis 6, wobei die funktionalisierte Säurekomponente mindestens eine Verbindung gemäß der folgenden allgemeinen Formel umfasst: 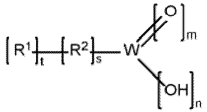 wobei:
R¹ ein lineare oder verzweigte, gesättigte oder ungesättigte, C₈-C₂₂-Kohlenwasserstoffgruppe ist;
R² eine aromatische funktionelle Gruppe, optional eine substituierte aromatische C₆-C₁₀-Gruppe ist;
W Phosphor oder Schwefel ist;
m 1 oder 2 ist, wobei m 1 oder 2 ist, wenn W Schwefel ist, und m 1 ist, wenn W Phosphor ist;
n 1 oder 2 ist, wobei n 1 ist, wenn W Schwefel ist, und n 2 ist, wenn W Phosphor ist;
s 0 oder 1 ist;
t 0 oder 1 ist;
mit der Maßgabe, dass s und t nicht beide 0 sein können.

12. Zusammensetzung nach Anspruch 11, wobei W Schwefel ist.

13. Zusammensetzung nach entweder Anspruch 11 oder 12, wobei s 1 ist und t 1 ist.

14. Zusammensetzung nach einem der Ansprüche 1 bis 13, wobei mindestens etwa 75 Prozent der Amingruppen, die in dem polymeren Dispersionsmittel vorhanden sind, jeweils einzeln mit einem Molekül der funktionalisierten Säurekomponente neutralisiert sind.

15. Zusammensetzung nach einem der Ansprüche 1 bis 14, wobei mindestens etwa 95 Prozent der Amingruppen, die in dem polymeren Dispersionsmittel vorhanden sind, jeweils einzeln mit einem Molekül der funktionalisierten Säurekomponente neutralisiert sind.

16. Pigmentdispersionszusammensetzung, umfassend:
a. ein Pigment; und
b. ein polymeres Dispergiermittel für das Pigment, das polymere Dispergiermittel umfassend die Zusammensetzung nach einem der Ansprüche 1 bis 15.

17. Tintenformulierung, umfassend:
a. die Pigmentdispersion nach Anspruch 16;
b. ein Lösungsmittel;
c. ein Bindemittel; und
d. mindestens einen zusätzlichen Zusatzstoff.

18. Verfahren zum Produzieren einer Pigmentdispersion, umfassend einen Schritt eines Kombinierens, in beliebiger Reihenfolge, eines Pigments, eines polymeren Dispergiermittels für das Pigment und einer funktionalisierten Säurekomponente und einen optionalen Schritt eines Mahlens des Pigments, wobei:
a. das polymere Dispergiermittel umfasst:
i. einen Durchschnitt von mindestens zwei Polyetherseitengruppen pro Molekül, wobei die mindestens zwei Polyetherseitengruppen aus Monomereinheiten bestehen, wobei mindestens eine Hälfte der Monomereinheiten Poly(ethylenoxid)-Monomereinheiten und/oder Poly(propylenoxid)-Monomereinheiten sind, und wobei die mindestens zwei Polyetherseitengruppen mindestens 50 Gewichtsprozent des polymeren Dispersionsmittels ausmachen, basierend auf dem Gesamtgewicht des polymeren Dispersionsmittels;
ii. und einen Durchschnitt von mindestens zwei Amingruppen pro Molekül, wobei die mindestens zwei Amingruppen nicht in den mindestens zwei Polyetherseitengruppen vorhanden sind;
b. die funktionalisierte Säurekomponente Sulfonsäure und/oder Phosphorsäure umfasst, die mit mindestens einer von einer aromatischen funktionellen Gruppe oder einer fettfunktionellen Gruppe funktionalisiert ist;
c. mindestens 60 Prozent der Amingruppen, die in dem polymeren Dispergiermittel vorhanden sind, jeweils einzeln mit einem Molekül der funktionalisierten Säurekomponente neutralisiert sind; und
d. der optionale Schritt des Mahlens des Pigments:
i. nicht durchgeführt wird;
ii. an dem Pigment allein durchgeführt wird, vor einer Zugabe des polymeren Dispergiermittels und/oder der funktionalisierten Säurekomponente; oder
iii. an einer Kombination aus dem Pigment und dem polymeren Dispergiermittel und/oder der funktionalisierten Säurekomponente durchgeführt wird.

19. Verfahren nach Anspruch 18, wobei das polymere Dispergiermittel und die funktionalisierte Säurekomponente vor der Zugabe des Pigments kombiniert werden, wobei der optionale Schritt des Mahlens des Pigments durchgeführt wird, bevor oder nachdem das Pigment zu der Kombination aus dem polymeren Dispergiermittel und der funktionalisierten Säurekomponente zugegeben wird.

20. Verfahren nach Anspruch 18, wobei das polymere Dispergiermittel und das Pigment kombiniert werden, der optionale Schritt des Mahlens des Pigments an der Kombination aus dem polymeren Dispergiermittel und dem Pigment durchgeführt wird und dann die funktionalisierte Säurekomponente der Pigmentzusammensetzung zugegeben wird.

## Revendications

1. Composition comprenant :
a. un dispersant polymère comprenant :
i. une moyenne d'au moins deux groupes greffés polyéther par molécule, dans laquelle les au moins deux groupes greffés polyéther sont constitués de motifs monomères, dans laquelle au moins la moitié des motifs monomères sont des motifs monomères poly(oxyde d'éthylène) et/ou des motifs monomères poly(oxyde de propylène), et dans laquelle les au moins deux groupes greffés polyéther constituent au moins 50 pour cent en poids du dispersant polymère, en fonction du poids total du dispersant polymère ; et
ii. une moyenne d'au moins deux groupes amine par molécule, dans laquelle les au moins deux groupes amine ne sont pas présents dans les au moins deux groupes greffés polyéther ; et
b. un composant acide fonctionnalisé comprenant de l'acide sulfonique et/ou de l'acide phosphorique fonctionnalisé avec au moins l'un parmi un groupe fonctionnel aromatique ou un groupe fonctionnel gras ; et
dans laquelle au moins 60 pour cent des groupes amine présents dans le dispersant polymère sont chacun individuellement neutralisés avec une molécule du composant acide fonctionnalisé.

2. Composition selon la revendication 1, dans laquelle le dispersant polymère comprend une moyenne allant de 2 à 200 groupes greffés polyéther par molécule.

3. Composition selon la revendication 1 ou la revendication 2, dans laquelle de 50 % à sensiblement la totalité des motifs monomères des groupes greffés polyéther sont des motifs monomères de poly(oxyde d'éthylène) et/ou des motifs monomères de poly(oxyde de propylène).

4. Composition selon l'une quelconque des revendications 1 à 3, dans laquelle le rapport du nombre de motifs monomères de poly(oxyde d'éthylène) au nombre de motifs monomères de poly(oxyde de propylène) va de 0:100 à 90:10.

5. Composition selon l'une quelconque des revendications 1 à 4, dans laquelle les groupes greffés polyéther constituent au moins 65 pour cent en poids du dispersant polymère, en fonction du poids total du dispersant polymère.

6. Composition selon l'une quelconque des revendications 1 à 5, dans laquelle le dispersant polymère comprend une moyenne allant de 2 à 500 groupes amine par molécule.

7. Composition selon l'une quelconque des revendications 1 à 6, dans laquelle le composant acide fonctionnalisé comprend un acide sulfonique fonctionnalisé avec au moins l'un parmi groupe fonctionnel aromatique ou un groupe fonctionnel gras.

8. Composition selon l'une quelconque des revendications 1 à 7, dans laquelle le composant acide fonctionnalisé comprend de l'acide dodécylbenzène sulfonique.

9. Composition selon l'une quelconque des revendications 1 à 8, dans laquelle le groupe fonctionnel aromatique est un groupe aromatique en C₆ à C₁₀ facultativement substitué.

10. Composition selon l'une quelconque des revendications 1 à 9, dans laquelle le groupe fonctionnel gras est un groupe hydrocarboné en C₈ à C₂₂ linéaire ou ramifié, saturé ou insaturé.

11. Composition selon l'une quelconque des revendications 1 à 6, dans laquelle le composant acide fonctionnalisé comprend au moins un composé selon la formule générale suivante : 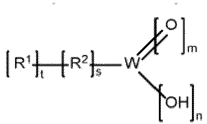 dans laquelle :
R¹ est un groupe hydrocarboné en C₈ à C₂₂ linéaire ou ramifié, saturé ou insaturé ;
R² est un groupe fonctionnel aromatique, facultativement un groupe aromatique en C₆ à C₁₀ substitué ;
W est phosphore ou soufre ;
m vaut 1 ou 2, dans laquelle m vaut 1 ou 2 lorsque W est soufre, et m vaut 1 lorsque W est phosphore ;
n vaut 1 ou 2, dans laquelle n vaut 1 lorsque W est soufre, et n vaut 2 lorsque W est phosphore ;
s vaut 0 ou 1 ;
t vaut 0 ou 1 ;
à condition que s et t ne puissent pas valoir l'un et l'autre 0.

12. Composition selon la revendication 11, dans laquelle W est soufre.

13. Composition selon la revendication 11 ou la revendication 12, dans laquelle s vaut 1 et t vaut 1.

14. Composition selon l'une quelconque des revendications 1 à 13, dans laquelle au moins environ 75 pour cent des groupes amine présents dans le dispersant polymère sont chacun individuellement neutralisés avec une molécule du composant acide fonctionnalisé.

15. Composition selon l'une quelconque des revendications 1 à 14, dans laquelle au moins environ 95 pour cent des groupes amine présents dans le dispersant polymère sont chacun individuellement neutralisés avec une molécule du composant acide fonctionnalisé.

16. Dispersion de pigment comprenant :
a. un pigment ; et
b. un dispersant polymère pour le pigment, le dispersant polymère comprenant la composition selon l'une quelconque des revendications 1 à 15.

17. Formulation d'encre comprenant :
a. la dispersion de pigment selon la revendication 16 ;
b. un solvant ;
c. un liant ; et
d. au moins un additif supplémentaire.

18. Procédé de production d'une dispersion de pigment comprenant une étape de combinaison, dans n'importe quel ordre, d'un pigment, d'un dispersant polymère pour le pigment et d'un composant acide fonctionnalisé, et une étape facultative de broyage du pigment, dans lequel :
a. le dispersant polymère comprend :
i. une moyenne d'au moins deux groupes greffés polyéther par molécule, dans lequel les au moins deux groupes greffés polyéther sont constitués de motifs monomères, dans lequel au moins la moitié des motifs monomères sont des motifs monomères poly(oxyde d'éthylène) et/ou des motifs monomères poly(oxyde de propylène), et dans lequel les au moins deux groupes greffés polyéther constituent au moins 50 pour cent en poids du dispersant polymère, en fonction du poids total du dispersant polymère ;
ii. et une moyenne d'au moins deux groupes amine par molécule, dans lequel les au moins deux groupes amine ne sont pas présents dans les au moins deux groupes greffés polyéther ;
b. le composant acide fonctionnalisé comprend de l'acide sulfonique et/ou de l'acide phosphorique fonctionnalisé avec au moins l'un parmi un groupe fonctionnel aromatique ou un groupe fonctionnel gras ;
c. au moins 60 pour cent des groupes amine présents dans le dispersant polymère sont chacun individuellement neutralisés avec une molécule du composant acide fonctionnalisé ; et
d. l'étape facultative de broyage du pigment :
i. n'est pas mise en œuvre ;
ii. est mise en œuvre sur le pigment seul avant addition du dispersant polymère et/ou du composant acide fonctionnalisé ; ou
iii. est mise en œuvre sur une combinaison du pigment et du dispersant polymère et/ou du composant acide fonctionnalisé.

19. Procédé selon la revendication 18, dans lequel le dispersant polymère et le composant acide fonctionnalisé sont combinés avant addition du pigment, dans lequel l'étape facultative de broyage du pigment est mise en œuvre avant ou après l'ajout du pigment à la combinaison du dispersant polymère et du composant acide fonctionnalisé.

20. Procédé selon la revendication 18, dans lequel le dispersant polymère et le pigment sont combinés, l'étape facultative de broyage du pigment est mise en œuvre sur la combinaison du dispersant polymère et du pigment, puis le composant acide fonctionnalisé est ajouté à la composition de pigment.
